# DEMANDE DE BREVET EUROPEEN

(11) **EP 0 566 514 A1**
(43) Date de publication de la demande: **20.10.1993**
(21) Numéro de dépôt: 93470007.1
(22) Date de dépôt: 01.03.1993
(51) Int. Cl.: C23G 1/36

(54) **Procédé de nettoyage d'une installation de séparation des composés de silicium contenus dans un bain de décapage chlorhydrique de produits en acier et dispositif pour sa mise en oeuvre**

(30) Priorité: 25.03.1992 FR 9203783
(71) Demandeur: SOLLAC S.A., F-92800 PUTEAUX (FR)
(72) Inventeur: Pavinato, Albert, F-57680 Corny (FR); Barbarossa, Hervé, F-57000 Metz (FR); Pazdej, Richard, F-57210 Maizieres-Lès-Metz (FR); Nicolle, Rémy, F-78370 Plaisir (FR)
(74) Mandataire: Ventavoli, Roger

(57) **Abrégé**

L'invention concerne un procédé de nettoyage d'une installation de séparation des composés de silicium contenus dans un bain de décapage chlorhydrique de produits en acier, dans laquelle le bain usé est recyclé après concentration par élimination d'eau, suivie d'un traitement en vue de la récupération des composés de fer, une opération de séparation solide-liquide telle qu'une microfiltration tangentielle étant effectuée sur le bain concentré afin d'en séparer les composés du silicium sous forme non-ionique et ainsi les concentrer dans une fraction du bain, et au moins la majeure partie de la fraction de ce bain contenant ces composés de silicium concentrés étant recirculée, procédé selon lequel périodiquement on effectue le nettoyage de ladite installation en y faisant circuler une solution d'acide fluorhydrique, caractérisé en ce que préalablement à cette opération de nettoyage, on fait circuler dans ladite installation une solution d'un hydroxyde de métal alcalin.

L'invention a également pour objet un dispositif pour la mise en oeuvre de ce procédé.

## Description

L'invention concerne le domaine de la séparation des composés de silicium contenus dans les bains de décapage chlorhydrique dans lesquels sont traités des produits sidérurgiques, tels que des tôles d'acier, avant leur revêtement.

Les tôles d'acier laminées à froid subissent, préalablement à leur revêtement, des opérations de nettoyage de leur surface qui est couverte d'oxydes, notamment d'oxydes de fer (calamine). La principale est une opération de décapage par une solution acide, par exemple d'acide chlorhydrique. Ces installations de décapage fonctionnent en circuit fermé, le bain d'acide chlorhydrique étant continûment régénéré après usage, puis remis dans le circuit de décapage. Cette régénération du bain consiste notamment en l'extraction et le traitement des composés formés à partir des éléments dont les oxydes ont été dissous par le bain, principalement les chlorures de fer. A cet effet, les bains usés subissent d'abord une concentration par évaporation d'une partie de leur eau, puis un traitement de pyrohydrolyse. Au cours de ce traitement, les chlorures de fer sont transformés en oxydes de fer solides et séparés du bain qui, ainsi épuré, est ensuite recyclé dans l'installation de décapage. Les oxydes de fer résultant de cette épuration peuvent être valorisés en servant de matières premières pour la fabrication de pigments de peintures ou de ferrites.

Particulièrement pour cette dernière application, le prix auquel ces oxydes de fer pourront être vendus est étroitement dépendant de leur pureté. Or les bains de décapage usés contiennent des quantités relativement importantes de silicium, dont les oxydes, présents dans la calamine, proviennent de l'oxydation superficielle des tôles. La teneur en silicium des bains est généralement de 30 à 40 mg/I contre 120 à 150 g/I de fer. 90 % de ce silicium se trouve sous forme "ionique", donc non filtrable, et si rien n'est fait pour l'empêcher, la plus grande partie des composés siliciques dissous passent dans le réacteur de pyrohydrolyse où ils sont transformés en silice. Cette silice se retrouve donc mélangée aux oxydes de fer, alors que sa présence est indésirable pour les utilisations les plus exigeantes de ces oxydes (teneur en silice admissible : 200 ppm pour les ferrites doux).

La Demande de brevet français FR 90 15621 propose un procédé de séparation des composés de silicium contenus dans un bain de décapage chlorhydrique, préalablement au traitement de pyrohydrolyse dudit bain. Selon ce procédé, après concentration du bain par élimination d'eau (concentration qui permet de diminuer la proportion de silice ionique jusqu'à 30 % environ), on effectue une séparation solide-liquide sur le bain afin d'en séparer les composés du silicium qui sont sous forme insoluble (non ionique). De préférence, cette séparation est effectuée au moyen d'une membrane de micro-filtration tangentielle. Cette membrane laisse passer un relativement faible débit de solution (le perméat) ne contenant plus de composés siliciques insolubles, et seulement une teneur réduite en composés solubles. La majeure partie de la solution (le rétentat) ne traverse pas la membrane, de même que les composés siliciques insolubles qui se trouvent ainsi concentrés dans le rétentat. Une petite partie du rétentat est ensuite évacuée de l'installation alors que le restant est renvoyé en amont de l'installation de microfiltration. Dans un autre mode d'exploitation de l'atelier de microfiltration tangentielle, le rétentat est évacué en continu avec un débit dont la valeur est ajustée de manière à réaliser un compromis entre la productivité de l'installation et la qualité de la filtration. Le restant repasse ensuite sur la membrane après avoir été mélangé à de la solution acide non encore épurée, en provenance de l'installation de concentration du bain de décapage. Préférentiellement, avant ce mélange, le rétentat subit un traitement (agitation ou acidification) visant à accélérer la précipitation des composés siliciques initialement solubilisés. On aura compris que ces opérations de concentration et de précipitation visent à faire passer à l'état précipité une quantité maximale des composés siliciques initialement solubilisés, de manière à permettre leur élimination par la membrane de micro- filtration et à minimiser autant que possible la quantité de composés siliciques dissous passant dans le perméat. Le rôle de l'évacuation d'une fraction du rétentat est de permettre l'obtention d'un compromis entre la récupération d'une grande quantité de composés siliciques sur la membrane et un encrassement pas trop rapide de cette membrane, compatible avec une marche industrielle de l'installation. Cet encrassement est principalement fonction de la quantité de liquide qui est passée sur la membrane.

L'encrassement progressif de la membrane par les composés siliciques précités qui se déposent sur elle constitue justement la principale limitation à l'utilisation d'une telle installation. Dans une membrane de microfiltration tangentielle, ce phénomène est un phénomène parasite puisque le principe de cette filtration ne repose pas sur la formation d'un gâteau (contrairement à la filtration frontale), mais sur des transferts de type capillaire entre les deux milieux qu'elle sépare. Cet encrassement diminue graduellement le débit de perméat sortant de l'installation, ce qui oblige l'opérateur à nettoyer périodiquement la membrane pour conserver une productivité suffisante. Ce nettoyage s'effectue habituellement à l'acide fluorhydrique dilué à 0,5-10 %, qui a la capacité de dissoudre la silice. Mais l'expérience montre que ce nettoyage n'est pas satisfaisant car il ne restitue pas à la membrane sa perméabilité initiale. Au fil des cycles d'utilisation, cette perméabilité finit par tendre vers zéro et la membrane doit donc être remplacée lorsque ses performances deviennent franchement insuffisantes. Ceci grève considérablement le coût du traitement du fait de la baisse de productivité de l'installation et du prix élevé des membranes qu'il faut remplacer trop fréquemment.

Le but de l'invention est de proposer une méthode de nettoyage efficace de la membrane, permettant une bonne et rapide régénération de ses performances, et diminuant nettement la fréquence de ses changements.

A cet effet, l'invention a pour objet un procédé de nettoyage d'une installation de séparation des composés de silicium contenus dans un bain de décapage chlorhydrique de produits en acier, dans laquelle le bain usé est recyclé après concentration par élimination d'eau, suivie d'un traitement en vue de la récupération des composés de fer, une opération de séparation solide-liquide étant effectuée sur le bain concentré afin d'en séparer les composés du silicium sous forme non-ionique et ainsi les concentrer dans une fraction du bain, et au moins la majeure partie de la fraction de ce bain contenant ces composés de silicium concentrés étant recirculée afin de favoriser la précipitation des composés du silicium sous forme non-ionique, procédé selon lequel périodiquement on effectue le nettoyage de ladite installation en y faisant circuler une solution d'acide fluorhydrique, caractérisé en ce que préalablement à cette opération de nettoyage, on fait circuler dans ladite installation une solution d'un hydroxyde de métal alcalin.

Préférentiellement, la solution d'acide fluorhydrique est diluée à 0,5-10 % environ, la solution d'hydroxyde alcalin est diluée à 0,5-10 %, et l'opération de séparation solide-liquide est une microfiltration tangentielle.

L'invention a également pour objet un dispositif pour la mise en oeuvre de ce procédé.

Comme on l'aura compris, l'invention consiste à réaliser le nettoyage de l'installation de filtration de la silice en deux étapes principales. La phase habituelle de lavage à l'acide fluorhydrique est ainsi précédée par une phase de lavage à l'aide d'une solution de soude ou de potasse.

L'acide fluorhydrique devrait normalement être capable de dissoudre sans difficultés majeures les composés siliciques déposés sur les milieux filtrants de l'installation (tels qu'une membrane de microfiltration tangentielle en composite fibre carbone-carbone à seuil de coupure de 0,2 pm), surtout si l'on procède à cette dissolution à une température supérieure à la température ambiante. Les inventeurs ont pourtant constaté que, comme on l'a dit, cette dissolution ne peut habituellement être menée jusqu'à son terme. Ils ont alors émis l'hypothèse que le dépôt formé sur la membrane ne contiendrait pas uniquement des composés siliciques, mais d'autres composés qui tendraient à inhiber la réaction de dissolution. Parmi les composés inhibiteurs susceptibles d'être présents et de former une couche protectrice autour des particules de composés siliciques et sur la face interne de la membrane de filtration, peuvent figurer des corps gras, tels que les huiles utilisées lors des opérations de laminage de la tôle. Ces huiles sont, en principe, enlevées de la surface de la tôle lors d'une opération de dégraissage qui précède le décapage acide. Toutefois, ce dégraissage n'est jamais absolument parfait, et on peut penser que le reliquat d'huiles se trouvant sur la tôle est partiellement entraîné dans le bain de décapage, et pénétre dans l'installation de retraitement du bain, en même temps que les composés siliciques. Comme ces derniers, les huiles s'y concentrent au fur et à mesure du déroulement des opérations et finissent par y être présentes à des doses qui deviennent gênantes pour le bon déroulement de la dissolution de la silice déposée sur la membrane. Les inventeurs ont donc imaginé d'essayer de dissoudre préalablement ces corps gras avant d'entreprendre la dissolution des composés siliciques, et les expériences qu'ils ont conduites ensuite tendent à validercette hypothèse de départ. Une solution de soude ou de potasse diluée à 0,5 à 10 % environ est apparue comme bien adaptée à cet usage, en procurant une régénération satisfaisante des performances des membranes sans être exagérément agressive à leur égard.

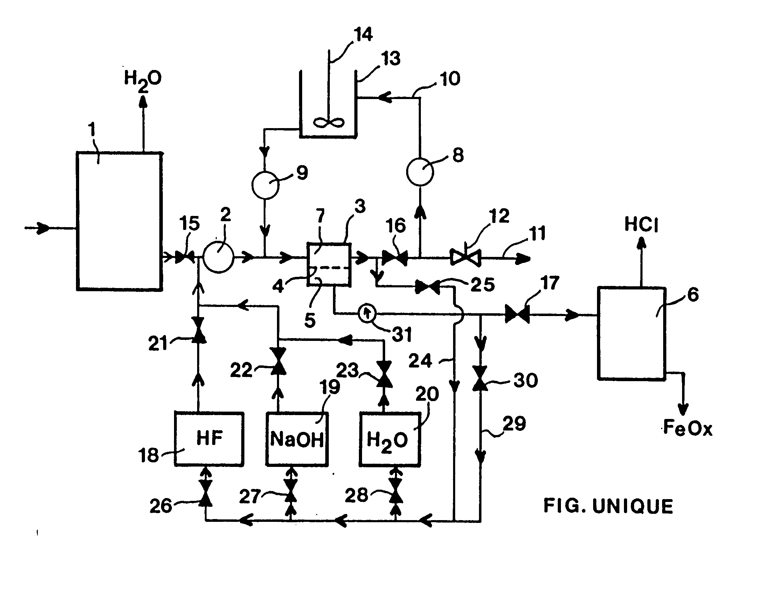

On va, à présent, décrire plus en détail un exemple d'installation de séparation des composés de silicium contenus dans un bain de décapage chlorhydrique de produits en acier, équipée d'organes permettant son nettoyage selon l'invention. Cette installation est schématisée sur la figure unique. De manière connue, elle comporte un récipient concentrateur 1 qui reçoit le bain usé en provenance de l'installation de décapage, et procède à sa concentration par évaporation d'environ 35 % de son eau. Le bain usé ainsi concentré est introduit par une pompe 2 dans une enceinte de microfiltration tangentielle 3 comprenant essentiellement une série de membranes 4 en fibre composite carbone-carbone, ayant un seuil de coupure de 0,2 f..lm, qui la séparent en deux chambres. Le perméat, qui ne contient pratiquement plus de silicium non ionique et une quantité résiduelle faible de silicium ionique, est recueilli dans la chambre inférieure 5, d'où il est dirigé vers une installation de traitement de pyrohydrolyse 6 suivant les procédés classiques RUTHNER ou LURGI, dans le but de récupérer d'une part les oxydes de fer solides FeOx et d'autre part l'acide chlorhydrique régénéré HCI qui est recyclé dans l'installation de décapage. Le surnageant, c'est-à-dire la portion du bain qui traverse la chambre supérieure 7 de l'enceinte 3 sans franchir la membrane 4, est mis en circulation par des pompes 8, 9 dans un circuit 10 de dérivation partant de la chambre supérieure 7 de l'installation de filtration et aboutissant en amont de cette enceinte. Préférentiellement, une partie du surnageant est évacuée de l'installation par un circuit de fuite 11, et ne sera donc plus traitée, une vanne 12 permettant de régler le débit de ce circuit de fuite 11. La présence de ce débit de fuite permet d'obtenir un compromis dans la productivité de l'installation : un débit de fuite faible ou nul permet de traiter de grandes quantités de bain, mais en contrepartie l'encrassement des membranes 6 est plus rapide que si on utilise un débit de fuite plus important, et l'installation doit être arrêtée plus souvent pour décrasser ou remplacer les membranes. Le circuit de recircula- tion 10 comprend également, de manière optionnelle mais conseillée, un récipient 13 muni d'un dispositif d'agitation 14. Ce récipient 13 ainsi équipé favorise la maturation des micelles de composés siliciques insolubles. Il peut également comporter des moyens pour augmenter l'acidité du bain, toujours pour favoriser la précipitation des composés de silicium.

Les organes qui viennent d'être mentionnés sont ceux qui sont indispensables ou utiles pour la mise en oeuvre du procédé connu de séparation des composés siliciques du bain de décapage chlorhydrique. On va maintenant décrire les organes grâce auquels, selon l'invention, l'installation de filtration peut être nettoyée efficacement. Une vanne 15 commande l'admission dans le circuit du bain usé concentré en provenance du concentrateur 1. Une vanne 16, disposée à la sortie de la chambre supérieure 7 de l'enceinte de microfiltration 3, commande l'admission du surnageant dans le circuit 10 de dérivation. Une vanne 17, disposée à la sortie de la chambre inférieure 5 de l'enceinte de microfiltration 3, commande l'admission du perméat dans l'installation de pyrohydrolyse 6. L'installation comporte également trois récipients 18, 19, 20 contenant respectivement une solution d'acide fluorhydrique à 2 % environ, une solution de soude à 2 % environ et de l'eau de rinçage. L'admission de ces liquides dans l'installation de séparation est commandée respectivement par des vannes 21, 22, 23, et cette admission a lieu entre la vanne 15 et la pompe 2. A la sortie de la chambre supérieure 7 de l'enceinte de microfiltration 3 et en amont de la vanne 16 est piquée une conduite de dérivation 24. Cette conduite comporte elle-même une vanne 25 commandant l'admission du surnageant, et permet de l'envoyer dans l'un ou l'autre des récipients 18, 19, 20, en fonction de l'ouverture ou de la fermeture de vannes 26, 27, 28 qui commandent l'admission de liquide dans ces récipients. A la sortie de la chambre inférieure 5 de l'enceinte de microfiltration 3 et en amont de la vanne 17 est piquée une autre conduite de dérivation 29. Elle comporte elle-même une vanne 30 commandant l'admission du perméat, et rejoint la dérivation 24 précédente afin de renvoyer le perméat dans l'un ou l'autre des récipients 18, 19, 20. Un débitmètre 31, implanté juste à la sortie de la chambre inférieure 5 de l'enceinte de microfiltration 3, permet de mesurer le débit de liquide traversant les membranes 4, ce qui donne une indication sur leur degré de colmatation.

L'installation peut être utilisée selon le cycle d'opérations suivant, les valeurs numériques étant données à titre d'exemple.
1) Epuration en continu du bain usé concentré sortant du concentrateur 1 et envoi du perméat dans le réacteur de pyrohydrolyse 6. Vannes ouvertes : 15, 16, 17, éventuellement 12. Vannes fermées : 21, 22, 23, 25, 30. Le bain usé concentré est à une température de l'ordre de 90°C. Mesure par le débitmètre 31 du débit de fluide traversant les membranes 4 neuves : 935 I/h.m² de membrane en début d'opération, 57 I/h.m² en fin d'opération.
2) Arrêt de l'épuration, vidange de l'enceinte de microfiltration 3.
3) Rinçage à l'eau de l'installation. Vannes ouvertes : 23, 25, 28, 30. Vannes fermées : 15, 16, 17, 21, 22, 26, 27. Durée 15 min.
4) Lavage de l'installation à l'aide de la solution de soude à 2 %, à température ambiante ou légèrement supérieure à l'ambiante (40°C par exemple). Vannes ouvertes : 22, 25, 27, 30. Vannes fermées : 15, 16, 17, 21, 23, 26, 28. Durée 30 min. Mesure du débit de liquide dans le débitmètre 31 : 280 I/h.m² en fin d'opération.
5) Rinçage à l'eau de l'installation (idem 3).
6) Lavage de l'installation à l'aide de la solution d'acide fluorhydrique à 2 %, à température ambiante ou légèrement supérieure à l'ambiante (40°C par exemple). Vannes ouvertes : 21, 25, 26, 30. Vannes fermées 15,16,17,22,23,27,28. Durée 30 min. Mesure du débit de liquide dans le débitmètre 31 en fin d'opération : 780 I/h.m².
7) Rinçage à l'eau de l'installation (idem 3)).
8) Remise en production de l'installation (idem 1).

On voit que l'utilisation de cette méthode de nettoyage permet de redonner aux membranes 4 la plus grande partie de leur perméabilité (débit : 780 I/h.m² au lieu de 935 I/h.m² initialement). Une optimisation des paramètres de traitement devrait permettre d'obtenir des résultats encore supérieurs. Une augmentation de la température de l'acide fluorhydrique de lavage (jusqu'à 60-80°C) serait notamment envisageable. Avec une opération de lavage unique par l'acide fluorhydrique, on obtient habituellement des débits de l'ordre de seulement 400 à 500 I/h.m² à l'issue du premier cycle d'utilisation, valeur qui ne pourra que diminuer sensiblement au fil de l'utilisation des membranes. La procédure choisie, à savoir l'adjonction d'une étape de lavage à la soude préalablement au lavage à l'acide fluorhydrique contribue donc bien à la résolution du problème posé.

Lorsque les solutions de lavage et l'eau de rinçage sont usées et ont perdu une part importante de leur efficacité, elles sont remplacées, neutralisées, et envoyées à une station d'épuration. On peut également choisir de ne pas renvoyer après usage ces solutions dans les récipients 18, 19, 20 et de n'utiliser en permanence que des solutions neuves. On peut également se dispenser des opérations de rinçage à l'eau, mais cela se ferait au détriment de la consommation de soude et d'acide fluorhydrique.

Comme on l'a dit précédemment, la soude peut être remplacée par un autre hydroxyde de métal alcalin, tel que de la potasse. De manière générale, des concentrations de l'ordre de 0,5 à 10 % pour le solutions d'acide fluorhydrique et d'hydroxyde alcalin sont bien adaptées à cette utilisation.

Le procédé et le dispositif décrits sont particulièrement bien adaptés au cas où la séparation solide-liquide du bain usé concentré et des composés siliciques est effectuée par micro-filtration tangentielle. Mais il va de soi qu'ils peuvent être utilisés sur d'autre types d'installations de filtration dans lesquelles se posent des problèmes de nettoyage, du fait de l'inhi- bition par des corps gras de la dissolution par l'acide fluorhydrique de la silice subsistant dans le filtre

## Revendications

1) Procédé de nettoyage d'une installation de séparation des composés de silicium contenus dans un bain de décapage chlorhydrique de produits en acier, dans laquelle le bain usé est recyclé après concentration par élimination d'eau, suivie d'un traitement en vue de la récupération des composés de fer, une opération de séparation solide-liquide étant effectuée sur le bain concentré afin d'en séparer les composés du silicium sous forme non-ionique et ainsi les concentrer dans une fraction du bain, et au moins la majeure partie de la fraction de ce bain contenant ces composés de silicium concentrés étant recirculée afin de favoriser la précipitation des composés du silicium sous forme non-ionique, procédé selon lequel périodiquement on effectue le nettoyage de ladite installation en y faisant circuler une solution d'acide fluorhydrique, caractérisé en ce que préalablement à cette opération de nettoyage, on fait circuler dans ladite installation une solution d'un hydroxyde de métal alcalin.

2) Procédé selon la revendication 1, caractérisé en ce que la solution d'hydroxyde d'un métal alcalin est une solution diluée à 0,5-10 % environ.

3) Procédé selon la revendication 1 ou 2, caractérisé en ce que la solution fluorhydrique est une solution diluée à 0,5-10 % environ.

4) Procédé selon la revendication 1, caractérisé en ce que, avant et après chaque opération de nettoyage et entre lesdites étapes de ladite opération, on rince l'installation avec de l'eau.

5) Procédé selon la revendication 1 à 4, caractérisé en ce que l'opération de séparation solide-liquide est une opération de microfiltration tangentielle.

6) Dispositif pour la séparation des composés de silicium contenus dans un bain de décapage chlorhydrique de produits en acier, du type comportant une installation (3) pour effectuer une séparation solide-liquide sur ledit bain, caractérisé en ce qu'il comporte des moyens (15,16,17,18,19,21,22,24,25,26,27, 29, 30) pour faire circuler en alternance dans ladite installation (3) une solution d'acide fluorhydrique et une solution d'hydroxyde de métal alcalin.

7) Dispositif selon la revendication 6, caractérisé en ce qu'il comporte également des moyens (20, 23,28) pour faire circuler dans ladite installation de l'eau de rinçage en alternance avec lesdites solutions d'acide fluorhydrique et d'hydroxyde de métal alcalin.

8) Dispositif selon la revendication 6 ou 7, caractérisé en ce que l'installation (3) comprend au moins une membrane de microfiltration tangentielle.
